# FASCICULE DE BREVET EUROPEEN

(11) **EP 1 040 543 B1**
(45) Date de publication et mention de la délivrance du brevet: **04.05.2005**
(21) Numéro de dépôt: 98964527.0
(22) Date de dépôt: 24.12.1998
(51) Int. Cl.: H02G 1/08, G02B 6/52, G02B 6/54

(54) **APPAREIL PORTABLE POUR LA POSE DE CABLE DANS UN CONDUIT**
TRAGBARES GERÄT ZUM VERLEGEN EINES KABELS IN EINEM ROHR
PORTABLE APPARATUS FOR LAYING A CABLE INSIDE A CONDUIT

(30) Priorité: 26.12.1997 FR 9716818
(43) Date de publication de la demande: 04.10.2000
(73) Titulaire: PLUMETTAZ SA, 1880 Bex (CH)
(72) Inventeur: PECOT, Alain, F-22300 Lannion (FR); LECOQ, Daniel, F-22300 Lannion (FR); LE GOFF, Gérard, F-22700 Perros Guirec (FR); WACINSKI, Andrzej, CH-1869 Massongex (CH)
(74) Mandataire: Maillet, Alain
(86) Numéro de dépôt international: PCT/FR1998/002884
(87) Numéro de publication internationale: WO 1999/034492

(56) Documents cités:
- EP-A- 0 108 590
- WO-A-95/11540
- WO-A-95/23988
- WO-A-98/12588
- FR-A- 2 551 593

## Description

La présente invention concerne un appareil de poussage et de tirage pour la pose de câbles et, particulièrement, de câbles à fibres optiques, dans des conduites entre des chambres. Ces chambres sont encore dites de tirage, car on y utilisait, notamment avec les câbles à circuits métalliques de forte capacité, la méthode de tirage classique.

Avec le développement de réseaux locaux en câbles à fibres optiques de faible capacité, qui sont très légers et d'un diamètre de l'ordre de deux à trois millimètres, on a développé des conduites, dites de microgénie civil, qui se composent chacune d'une pluralité de conduits de six à sept millimètres de diamètre.

Pour la pose de câble dans ces conduits, il existe plusieurs méthodes connues parmi lesquelles on peut citer: le tirage classique en utilisant une ligne souple de traction dans une chambre de tirage au bout aval du conduit, le tirage étant parfois accompagné d'un poussage additionnel en tête du conduit; le tirage avec furet en utilisant un fluide qui est introduit en tête de conduit dans une chambre, et qui agit sur un furet étanche relié au bout aval du câble, ce tirage avec furet pouvant également s'accompagner d'un pousseur additionnel en tête du conduit; le portage en utilisant un fluide sous pression qui circule à grande vitesse dans le conduit à partir de la tête du conduit et qui entraîne le câble, le portage pouvant être aussi accompagné d'un poussage additionnel.

Le tirage classique et le tirage avec furet sont bien connus. Le portage, d'utilisation plus récente, a fait l'objet de plusieurs descriptions, par exemple dans les documents EP-A-0 108 590, EP-A-0 292 037. D'autres documents, tels que EP-A-0 445 622, EP-A-0 544 388, CH-A-587 575, décrivent des méthodes voisines du portage.

Dans le document EP-A-0 108 590 publié le 16.05.84, il est décrit un procédé de portage pour entraîner des fibres optiques gainées de poids léger et souples dans un conduit préalablement installé in situ. Dans le conduit, le frottement d'un fluide qui s'y écoule à vitesse élevée exerce, en passant sur le câble, une force de tirage et entraîne le câble. Le document décrit aussi un exemple de réalisation d'un appareil comportant, placée en tête du conduit, une enceinte dans laquelle une source haute pression de fluide alimente le conduit dans le sens de tirage du câble et, de plus, renferme une paire de roues d'entraînement caoutchoutées destinées à compenser la force opposée au sens d'avancement des fibres gainées en raison de la surpression régnant à l'intérieur de l'enceinte au point d'entrée du câble.

Dans le document EP-A-0 292 037 publié le 23.11.88, il est aussi décrit un appareil qui se différencie de l'appareil décrit dans le document EP-A-0 108 590, par la nature et la fonction du mécanisme de poussée, car, en plus de la compensation des forces opposées signalées ci-dessus, le mécanisme de poussée est capable de fournir une poussée additionnelle indispensable pour compléter les forces insuffisantes exercées par le portage, pour permettre l'avancement d'un câble lourd et rigide.

Dans le document EP-A-0 445 622 publié le 11.09.91, pour l'installation d'un câble à fibres optiques, notamment dans un conduit vertical, il est décrit un appareil de tirage en réduisant l'effet des frottements dans lequel on crée un écoulement de fluide dans le sens opposé à celui d'avancement du câble, cet écoulement entraînant une poussée d'Archimède qui éloigne le câble de la paroi du conduit et fait diminuer les frottements mécaniques.

Dans le document EP-A-0 544 388 publié le 02.06.93, il est décrit un appareil portable qui sert à faire avancer un câble dans un conduit en lui appliquant un jet de fluide à effet Coanda.

Dans le document CH-A-587 575 du 13.03.77, il est décrit un pistolet à air comprimé destiné à propulser une longueur de ficelle dans un canal prévu dans un mur pour recevoir des fils électriques.

Le document WO-A-9 523 988 décrit un appareil portable de poussage et de tirage pour la pose de câbles dans un conduit comprenant un arbre d'entraînement rotatif entraînant un cabestan ainsi qu'un disque fou à axe parallèle à celui du cabestan de manière à recevoir un câble à traiter, entraîné et serré entre eux.

Le document WO-A-9 511 540, d'autre part, décrit un appareil de poussage et de tirage comportant un cabestan et un disque fou ainsi que des moyens de réglage de la pression radiale qu'exerce le disque fou sur le câble à traiter.

Les méthodes classiques, avec ou sans furet, et les méthodes qui utilisent un fluide sous pression pour le portage ou pour créer une poussée d'Archimède, et leurs combinaisons ont donné l'occasion aux industriels de proposer des équipements spécifiques à chacune des méthodes mentionnées ci-dessus. Ainsi, par exemple, le tirage nécessite un treuil avec dispositif de mesure et de réglage de la force de traction exercée; pour le poussage-tirage avec milieu fluide évoqué dans les documents cités ci-dessus, plusieurs appareils différents ont été proposés. Chacun de ces divers appareils représente un investissement important qui augmente le coût de pose contrôlée de câbles à fibres optiques, dans des chantiers à l'intérieur ou à l'extérieur de bâtiments, ou entre ceux-ci.

Un objet de la présente invention consiste à prévoir, pour la pose contrôlée de câbles dans des conduits en microgénie civil, un appareil portable universel.

Par pose contrôlée, on entend l'introduction d'un câble dans un conduit, à l'intérieur ou à l'extérieur d'un bâtiment, par un moyen mécanique exerçant une traction ou une poussée sur le câble, la traction ou la poussée ne dépassant pas une valeur de consigne donnée par l'opérateur sur la base de valeurs indiquées par le constructeur du câble, ou sur la base d'une opération de calibrage de l'appareil effectuée sur le chantier.

Par portable, on entend un appareil léger, facilement transportable et utilisable par un homme seul dans un espace restreint.

Par universel, on entend un appareil de pose de câble faisant office de treuil ou cabestan de tirage. de transporteur intermédiaire et de tracteur-pousseur d'un dispositif de soufflage et de portage par milieu fluide, l'appareil pouvant être entraîné par une source d'énergie mécanique quelconque tournant à vitesse contrôlée, par exemple une perceuse manuelle électrique ou pneumatique du genre couramment utilisé sur les chantiers de construction.

La présente invention concerne un appareil selon la revendication 1 et dans lequel l'appareil portable universel est un boîtier qui a, en plan, la forme d'un rectangle et qui est formé d'une base couplée à une poignée cylindrique, et d'un couvercle, une articulation à charnière reliant la base et le couvercle sur un petit côté, et un jeu de vis permettant d'assurer la fermeture du couvercle sur la base, l'axe de la poignée cylindrique se projetant au centre du rectangle de la base et, coaxial à cet axe, un arbre d'entraînement rotatif étant monté dans la poignée, la base étant constituée par une plaque rectangulaire qui, du côté de la charnière, présente un premier creux plat sur le fond duquel est monté perpendiculaire l'axe de rotation d'un cabestan d'entraînement, qui, de l'autre côté, présente un second creux dans lequel se logent un disque fou à axe parallèle à celui du cabestan et son dispositif de réglage longitudinal, et, entre les premier et second creux, une gorge transversale semi-cylindrique qui est destinée à recevoir un câble qui est entraîné et serré entre le cabestan et le disque fou dont les axes se trouvent sur la ligne médiane longitudinale dudit rectangle, le cabestan étant entraîné par un moyen quelconque couplé à l'arbre d'entraînement situé dans la poignée.

Suivant une autre caractéristique, comme moyen quelconque, le cabestan porte, sur sa face inférieure, une couronne dentée intérieurement qui engrène un engrenage porté par l'arbre d'entraînement, lui-même couplé à une prise de force permettant l'accouplement à une source d'énergie mécanique.

Suivant une autre caractéristique, dans la poignée, il est prévu, entre l'arbre d'entraînement et la prise de force, un dispositif de réglage fin à embrayage limiteur de couple.

Suivant une autre caractéristique, coaxiaux à la gorge transversale, se trouvent, de chaque côté de la base, des premiers demi-manchons prévus dans les bords de la base et prolongés en saillie externe, chacun des demi-manchons portant respectivement une douille dont le diamètre externe correspond à celui des premiers demi-manchons et dont le diamètre interne est fonction de celui du câble à entraîner, et, en face des premiers demi-manchons, les bords du couvercle comportent des seconds demi-manchons qui, quand l'appareil est fermé, s'adaptent aux premiers demi-manchons pour former des manchons de révolution, dans lesquels se logent respectivement les douilles.

Suivant une autre caractéristique, l'axe du disque fou est monté au coin d'une équerre formée par deux bras, l'un monté sur un pivot fixe perpendiculaire au fond du second creux et l'autre portant un écrou dans lequel passe une vis de réglage pivotant autour d'un pivot fixe par rapport à la base, la vis de réglage pouvant être tournée par une molette externe à la disposition de l'opérateur.

Suivant une autre caractéristique, la base comporte une buse d'entrée d'air comprimé de manière que l'intérieur de l'appareil à l'état fermé puisse être mis sous pression et la douille de sortie par où sort le câble à pousser a un diamètre interne supérieur à celui du câble de manière que de l'air sous pression puisse s'échapper par ladite douille de sortie.

Suivant une autre caractéristique, la jante du cabestan est revêtue d'une matière à coefficient de frottement élevé.

Suivant une autre caractéristique, le couvercle présente, dans une zone centrale de son fond, un regard qui permet de voir, au moins partiellement, le disque fou et d'apprécier son entraînement par le câble.

Suivant une autre caractéristique, le disque fou porte à sa périphérie un aimant qui entraîne un compte-tours dont l'affichage est visible dans une fenêtre du couvercle.

Suivant une autre caractéristique, la douille d'entrée sert à monter, côté interne, une tétine d'étanchéité à travers laquelle passe le câble entrant dans l'appareil.

Suivant une autre caractéristique, la tétine comprend un pied creux circulaire qui se loge dans une rainure circulaire de la douille d'entrée, prolongé par un corps creux cylindrique, puis par une pointe creuse conique, la matière constituant la pointe étant translucide ou transparente, la pointe étant coupée de manière à ce que le cercle de coupure assure l'étanchéité sur la câble.

Suivant une autre caractéristique, à l'appareil est associé un furet qui comporte une tige cylindrique axiale qui comporte un bout en forme de tête hémisphérique, plus grosse, qui est suivi vers l'arrière d'une jupe conique partant de la périphérie jusqu'à un anneau fin en relief.

Suivant une autre caractéristique, du côté de la douille de sortie, il est prévu un orifice d'entrée dont l'axe est tangent au cabestan, l'orifice d'entrée étant formé par des demi-manchons cylindriques prévus respectivement dans les bords de la base et du couvercle.

Suivant une autre caractéristique, l'arbre d'entraînement dans la poignée, d'une part, et la prise de force sont couplés d'une manière perpendiculaire.

Les caractéristiques de la présente invention mentionnées ci-dessus apparaîtront plus clairement à la lecture de la description suivante d'exemples de réalisation, ladite description étant faite en relation avec les dessins joints, parmi lesquels:
la Fig. 1 est une vue en perspective de l'appareil fermé, avant utilisation,
la Fig. 2 est une vue en perspective de l'appareil ouvert, montrant la base de l'appareil vu par dessus,
la Fig. 3 est une vue en perspective de l'appareil ouvert, montrant la base de l'appareil vu par dessous,
la Fig. 4 est une vue en perspective de l'appareil ouvert, montrant vu par dessous les organes mobiles de l'appareil dont les parties immobiles sont dessinées en traits tirets,
la Fig. 5 est un schéma destiné à illustrer, en plan, la base de l'appareil
la Fig. 6 est une vue en coupe de la base de l'appareil, suivant la ligne YY' de la Fig. 5,
la Fig. 7 est une vue en perspective d'un exemple de réalisation de tétine utilisable dans l'appareil de l'invention,
la Fig. 8 est une vue en coupe longitudinale de la tétine de la Fig. 7,
la Fig. 9 est une vue en perspective d'un exemple de réalisation de furet utilisable, comme accessoire, avec l'appareil de l'invention,
la Fig. 10 est une vue en coupe longitudinale du furet de la Fig. 9.
la Fig. 11 est une vue en perspective d'une première variante de réalisation de l'appareil des Figs. 1 à 3, représentée à l'état fermé comme à la Fig. 1,
la Fig. 12 est une vue en perspective de l'appareil de la Fig. 11, représenté à l'état ouvert comme à la Fig. 2, et
la Fig. 13 est une vue en perspective d'une seconde variante de réalisation de l'appareil des Figs. 1 à 3.

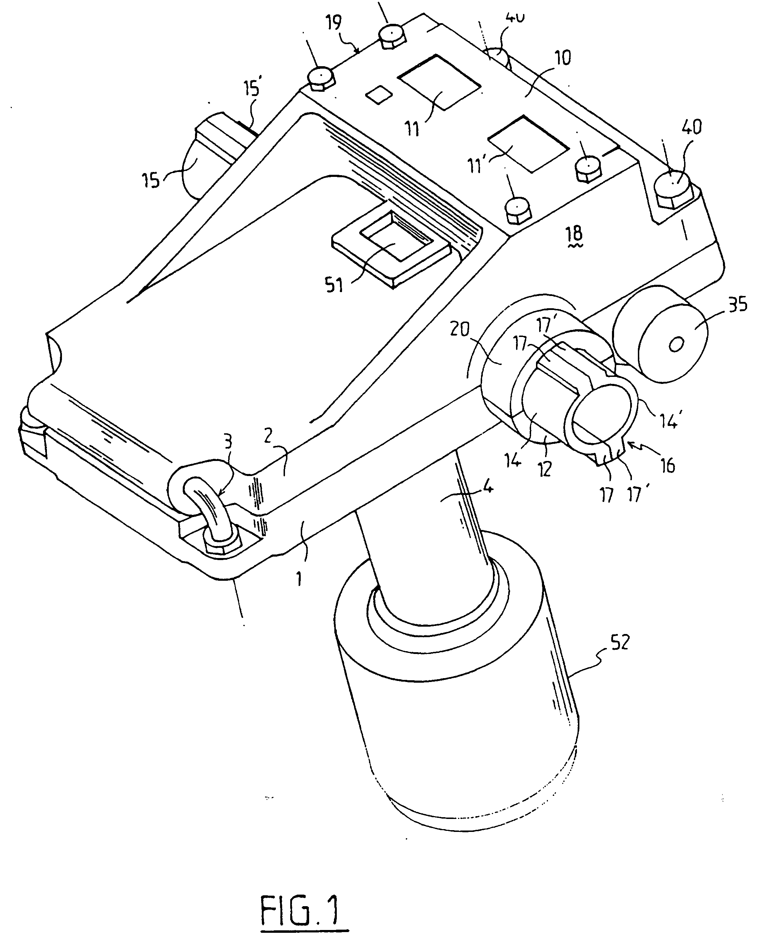

Comme le montrent les perspectives des Figs. 1, 2 et 3, l'appareil portable universel de l'invention a l'allure d'un coffret comportant une base 1 et un couvercle 2, reliés par une charnière 3, la base 1 étant portée, dans sa partie centrale, au bout d'une poignée cylindrique 4.

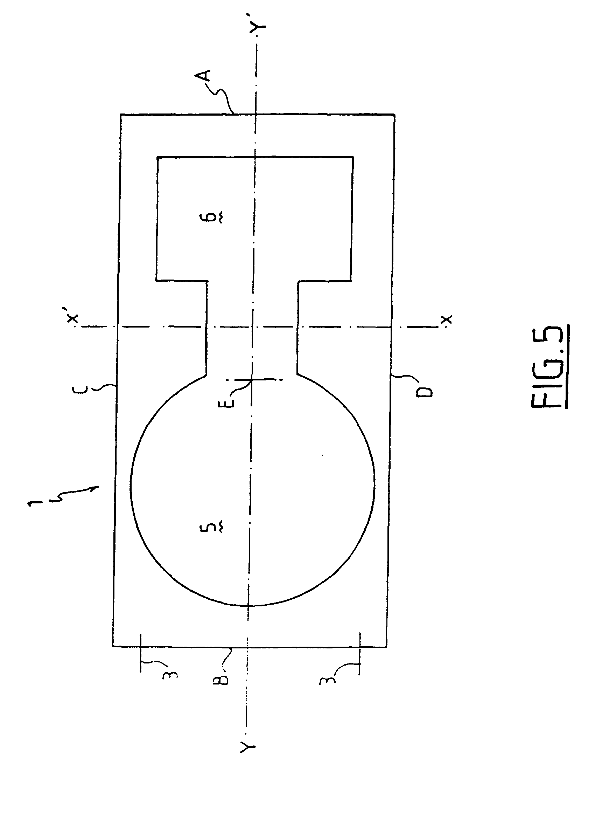

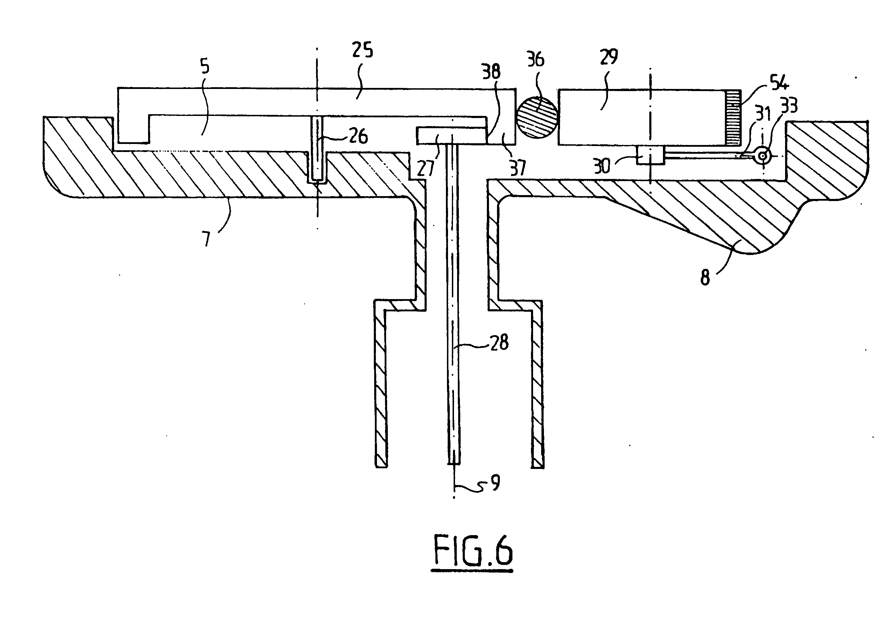

La base 1 du coffret est une plaque qui a, dans la vue schématique en plan de la Fig. 5, la forme d'un rectangle formé de deux petits côtés A et B, et de deux grands côtés C et D. La plaque rigide en matière plastique ou métallique de la base 1 comporte une face supérieure qui, du côté B du rectangle où se trouve la charnière 3, présente un premier creux cylindrique 5 et, vers le côté A du rectangle, un second creux 6, et une face inférieure 7, Fig. 6, plane et parallèle à la face supérieure en partant du côté B, et comportant, sous le creux 6, une partie renflée 8, et qui, dans sa partie centrale, est reliée à une extrémité de la poignée 4. L'axe de révolution 9, Fig. 6, de la poignée cylindrique 4 est perpendiculaire au plan de la face 7 et se projette sensiblement au centre E du rectangle de la base 1, Fig. 5.

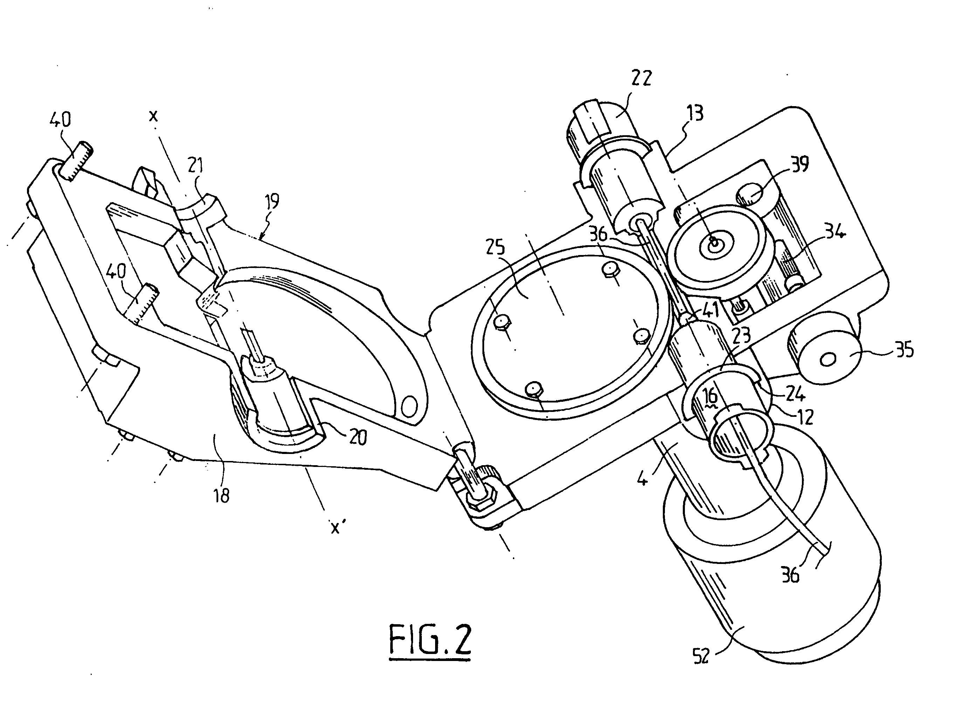

Le couvercle 2 du coffret a, également vu en plan, la forme d'un rectangle de même dimension que celui de la base 1 pour s'adapter sur celle-ci, comme le montre la perpective de l'appareil fermé de la Fig. 1, avec des rebords longitudinaux et transversaux pour pouvoir recouvrir les éléments montés sur la plaque de la base 1, comme le montre la perpective de l'appareil ouvert de la Fig. 2. Vu en coupe longitudinale, le couvercle 2 comprend, en partant de la charnière 3, une plaque rigide de matière plastique ou métallique qui est d'abord plane, puis qui présente, au-dessus du creux 6 (en considérant l'appareil à l'état fermé), une surélévation créant une chambre 10 dans laquelle se logent des écrans d'affichage 11 et 11'.

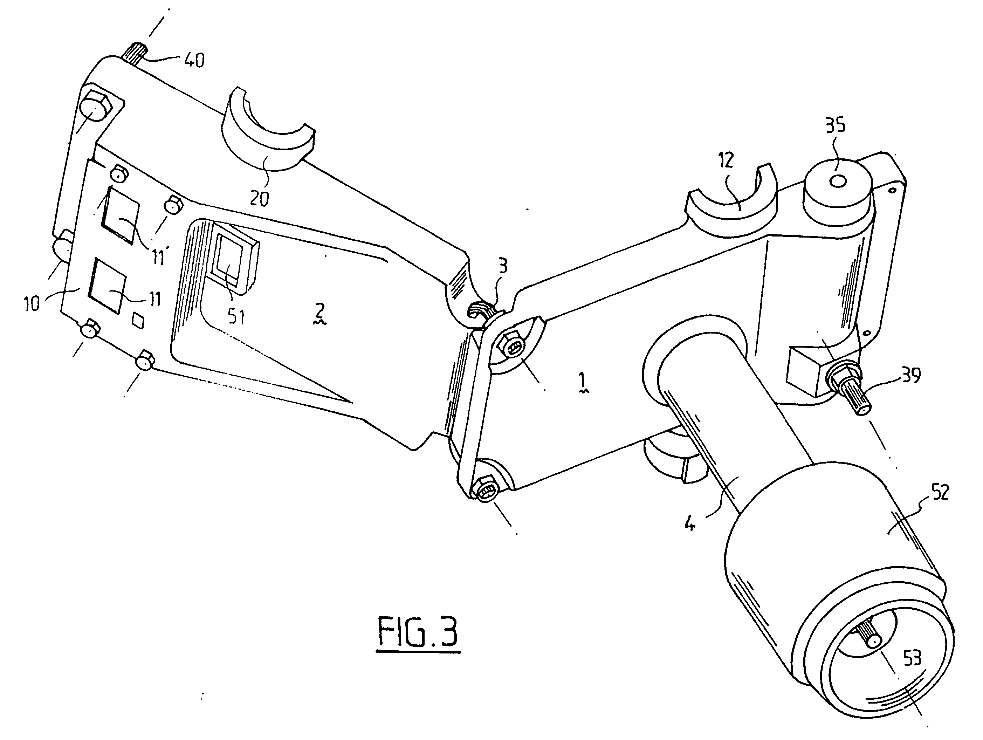

Sur la vue schématique de la Fig. 5, entre le centre E et le petit côté A, on a montré une ligne transversale XX' qui symbolise l'axe d'un câble que l'appareil de l'invention est destiné à traiter (tirer ou pousser). Comme le montrent nettement les Figs. 2 et 3, les grands côtés C et D de la base 1 sont pourvus respectivement de courts demi-manchons 12 et 13 qui ont chacun une section transversale semi-circulaire et qui se prolongent respectivement en saillie à l'extérieur du rectangle de la base 1, de chaque côté de celle-ci. Les demi-manchons 12 et 13 sont alignés transversalement et sont coaxiaux à la ligne d'axe XX'. La section droite d'un manchon 12 ou 13 correspond à une demi-couronne dont les extrémités, diamétralement opposées, sont dans le plan de la face supérieure de la base 1.

Les demi-manchons 12 et 13 sont destinés à recevoir respectivement des demi-douilles 14, 14' et 15, 15'. La douille 16 formée par l'assemblage des demi-douilles 14 et 14' a une section transversale en forme de couronne circulaire dont le diamètre du cercle extérieur correspond au diamètre interne du demi-manchon 12 ou 13. Le plan de raccordement des demi-douilles 14 et 14', qui forment la douille 16, est perpendiculaire au plan de la face 7. A la Fig. 1, on peut voir que chaque demi-douille 14 et 14' présente, au voisinage de ce plan de raccordement, des rebords externes radiaux 17 et 17' qui s'appliquent les uns contre les autres, afin de positionner correctement les demi-douilles 14 et 14'.

Comme le montrent les Figs. 1 et 2, les rebords longitudinaux 18 et 19 du couvercle 2 sont respectivement échancrés et munis de courts demi-manchons 20 et 21. Le demi-manchon 20 a la même section transversale semi-circulaire que le demi-manchon 12 et, sur le rebord 18, a une position telle qu'il vient chevaucher la douille 16, quand l'appareil est à l'état fermé comme le montre la Fig. 1. Les demi-manchons 12 et 20 présentent des rainures, transversales parallèles à la ligne XX', pour loger les rebords radiaux 17 et 17'.

Le demi-manchon 13 correspond au demi-manchon 21 et, quand l'appareil est refermé, Fig. 1, ces demi-manchons servent à loger une douille 22 formée par l'assemblage des demi-douilles 15 et 15', qui sont très semblables au demi-douilles 14 et 14'. Dans la suite, on signalera les points de différence quand ils existent. Afin de positionner transversalement les douilles 16 et 22 dans leurs manchons respectifs, elles sont munies, en saillie, de couronnes circulaires 23 qui se logent dans des rainures circulaires 24 creusées dans les demi-manchons et qui servent de butée d'arrêt.

La douille 22, formée des demi-douilles 15 et 15', est échangeable, c'est-à-dire que son diamètre externe est fixe pour s'adapter aux demi-manchons 13 et 13', mais son diamètre interne est choisi en fonction du diamètre du câble à pousser et du diamètre du conduit dans lequel il est prévu de pousser le câble. Il en est de même pour la douille 16 formée des demi-douilles 14 et 14', à ceci près qu'à l'entrée dans l'appareil, il est prévu d'installer une tétine qui sera décrite plus tard.

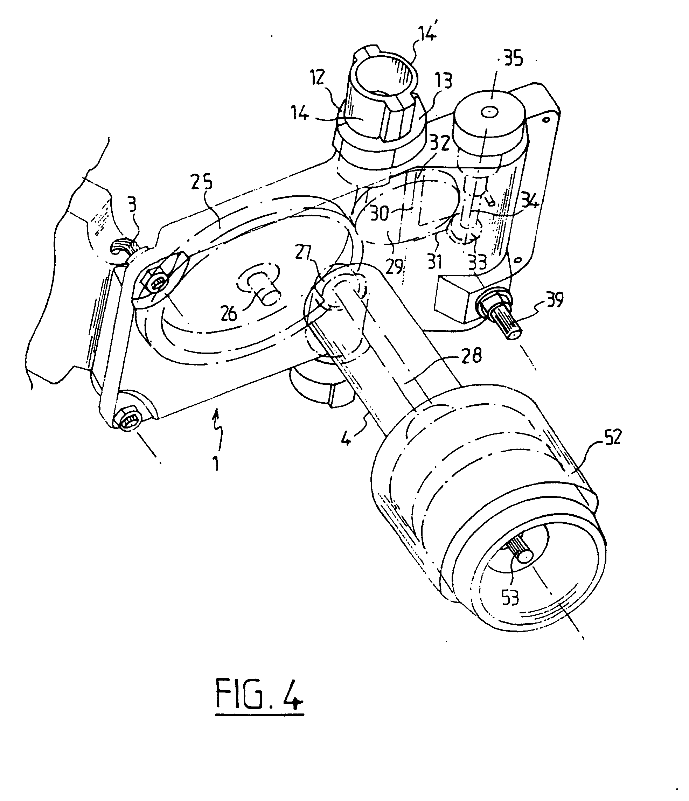

Comme le montrent les vues en perspective des Figs. 2 et 4, et la vue en coupe schématique de la Fig. 6, dans le creux 5 de la plaque de la base 1, un disque rotatif ou cabestan 25 est monté sur un axe 26, fixé dans le fond du creux 5, et comporte une couronne dentée inférieure entraînée en rotation par un engrenage hypocycloïde 27 monté au bout d'un arbre d'entraînement 28 situé dans la poignée cylindrique 4. L'axe de l'arbre 28 se confond avec l'axe de révolution 9. La jante du cabestan 25 est recouverte d'un revêtement relativement rugueux, sans être abrasif. Cette jante sert à entraîner le câble à traiter.

Dans le creux 6, un disque ou roulette d'appui 29 est monté, par son axe, sur le coin d'une équerre, Figs. 4 et 6, qui est constituée par deux bras perpendiculaires 30 et 31. L'extrémité du bras 30, opposée au coin de l'équerre, est montée pivotante sur un pivot 32 fixé au fond du creux 6. L'extrémité du bras 31, opposée au coin de l'équerre, a la forme d'un écrou 33 dans laquelle se visse une vis de réglage 34 qui passe à travers le rebord du creux 6 vers l'extérieur de la base I et qui comporte, à son bout libre, une molette 35 qui est disponible pour être tournée par l'opérateur.

Le cabestan 25 et la roulette 29 forment ensemble un organe de tirage ou de poussage d'un câble 36, comme le montre schématiquement la Fig. 6, le câble 36 entrant dans l'appareil par la douille 16 et en sortant par la douille 22. Le cabestan 25 est le disque d'entraînement qui frotte contre la gaine du câble 36 et l'entraîne par frottement. La gaine du câble 36 touche aussi la roulette d'appui 29 et l'entraîne car elle est folle sur son axe. La position de l'axe du cabestan 25 est fixe, comme on l'a mentionnée plus haut, tandis que la position de l'axe de la roulette 29 peut être modifiée. Quand l'opérateur désire opèrer un réglage de la position de la roulette d'appui 29 par rapport à la position du cabestan 25, pour les rapprocher ou les éloigner un peu en fonction du diamètre du câble 36, il tourne la molette 35 si bien que la vis 34 entre plus ou moins dans l'écrou 33, ce qui fait tourner l'équerre autour du pivot 32 et déplace l'axe de la roulette 29.

La face inférieure du cabestan 25 comporte une couronne externe dentée 37 qui engrène la couronne dentée externe 38 de l'engrenage 27, entraîné par l'arbre 28. Comme on l'a mentionné ci-dessus, la partie inférieure de la poignée 4 présente, de préférence, la forme d'une prise de force qui entraîne l'arbre 28, cette prise de force pouvant être couplée à une source d'énergie portable, par exemple une perceuse électrique manuelle de type courant, par l'intermédiaire d'un arbre flexible amovible.

L'appareil de l'invention comporte encore une buse d'entrée d'air 39 permettant d'alimenter l'intérieur de l'appareil en air comprimé, le couvercle 2 étant muni d'un joint d'étanchéité, non montré, pour que, quand l'appareil est fermé, Fig. 1, l'enceinte intérieure dans laquelle se trouvent le cabestan 25, la roulette d'appui 29 et le câble 36 soit sous pression, avec de l'air qui peut s'échapper entre la paroi cylindrique interne de la douille de sortie 22 et le câble 36 dans le conduit dans lequel est entraîné le câble. Comme le montrent les Figs. 1, 2 et 3, des vis 40 servent à fermer l'appareil d'une manière étanche, compte tenu du joint, et serrent le couvercle 2 sur la base 1.

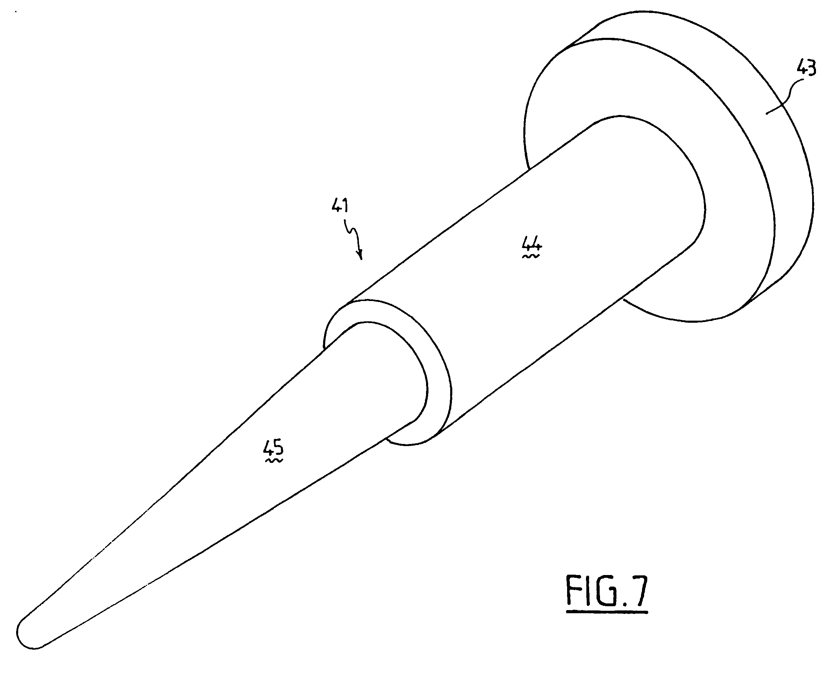

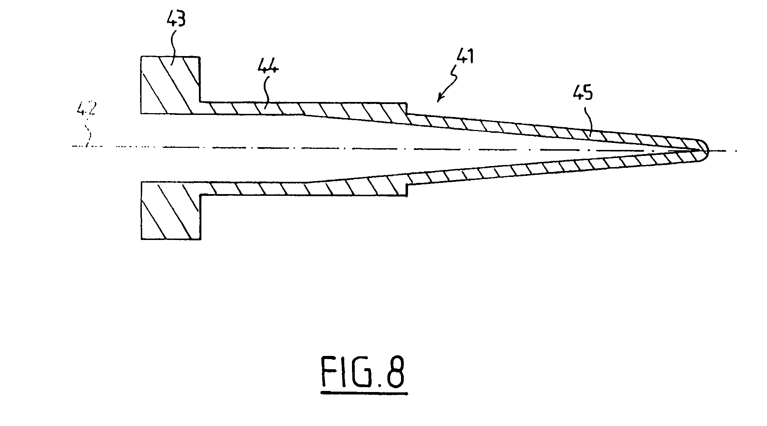

Il ne faut évidemment pas que de l'air comprimé s'échappe dans la douille d'entrée 16. A cet effet, une tétine 41, montrée à la Fig. 2, est prévue, tournée vers l'intérieur de l'appareil, à la sortie de la douille 16. Cette tétine 41 est montrée, plus en détail, aux Figs. 7 et 8, et comporte un corps creux de révolution autour d'un axe 42, où l'on peut distinguer trois parties 43, 44 et 45. La partie ou pied 43 est cylindrique, creux et relativement épais, aussi bien en hauteur qu'en épaisseur et est suivi d'un corps 44 cylindrique, creux, moins épais, mais beaucoup plus haut. Le corps 44 est suivi d'une pointe 45 conique, creuse et peu épaisse. Le pied 43 sert à fixer transversalement la tétine 41 dans la douille 16, chaque demi-douille 14 ou 14' présentant respectivement, sur sa paroi interne, une demi-gorge, non montrée dans un but de simplification, permettant de loger la moitié du pied 13, la demi-gorge étant prévue du côté intérieur de la douille 16.

Bien entendu, avant d'utiliser la tétine 41, le bout de la pointe 45 de celle-ci est coupé pour que le câble 36 puisse passer. Il faut que le contact entre le bout de la tétine 41 et le câble 36 soit étanche. C'est pourquoi, de préférence, la tétine 41 est réalisée en matière plastique translucide, par exemple en PVC dans un moule par injection, ce qui permet d'introduire un bout du câble à traiter dans le pied 43 jusqu'à l'amener en butée sur la paroi interne conique de la pointe 45. Lorsque le contact en butée est obtenu, on coupe la pointe de la tétine au droit de l'extrémité du câble qui est bien visible à travers la tétine, surtout que la gaine du câble est, en général, de couleur noire.

Une tétine 41 est indispensable, par exemple, quand l'appareil est utilisé en mode portage par flux d'air, pour éviter que l'air comprimé arrivant par la buse 39 et destiné à sortir par la douille 22 autour du câble ne s'échappe par la douille 16. C'est le cas également en ce qui concerne la pose de câble avec furet.

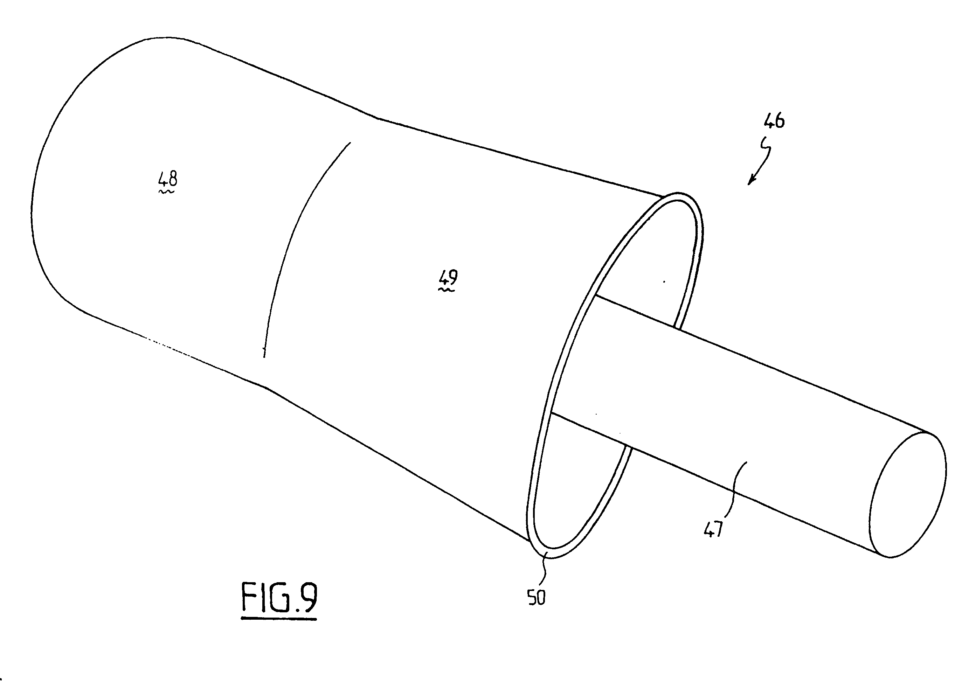

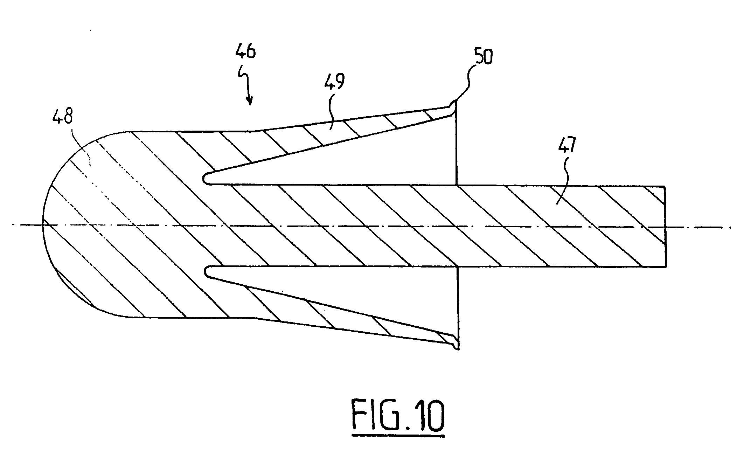

Les Figs. 9 et 10 montrent un furet 46 qui a une forme de révolution et qui comporte une tige cylindrique axiale 47 qui a un bout, non montré, auquel est accroché la tête du câble à tirer et un bout avant s'épanouissant en forme de tête hémisphérique 48 sur laquelle se greffe une jupe conique 49 qui s'ouvre vers l'arrière pour se terminer par un anneau fin en relief 50.

Par rapport aux furets existants qui présentent l'inconvénient d'être frottant par rapport au conduit dans lequel on pose le câble, le furet 46, Figs. 9 et 10, présente de nombreux avantages. La tête hémisphérique 48, dont le diamètre est inférieur à celui du conduit, facilite le passage; la jupe arrière conique 49 est souple et déformable, et le diamètre de l'anneau 50 peut être ajusté à celui du conduit. Ainsi, cette forme permet un frottement limité à une génératrice, tout en garantissant l'étanchéité par une légère déformation de la jupe souple sous l'effet de la pression du flux d'air, même faible (1 à 2 bars) injecté dans le conduit autour du câble.

De plus, cette forme permet de conserver le même frottement quand on augmente la pression, jusqu'à 5 ou 6 bars, pour poser de plus grande longueur de câble dans un conduit. Ceci n'est pas le cas des furets "à jupe" traditionnels dont le frottement augmente beaucoup avec la pression, car la surface de frottement devient plus importante sous l'effet de la déformation de la jupe du furet sous la pression de l'air, la jupe étant plaquée sur la paroi interne du conduit sur une surface importante.

Comme le montrent les Figs. 1 et 3, sur le couvercle 2, est prévu un regard rectangulaire 51, réalisé en ouvrant un rectangle dans le fond du couvercle et en l'obturant avec une matière transparente, qui permet de voir la position de la roulette d'appui 29 et le câble 36, quand l'appareil est fermé. Ce regard 51 permet d'apprécier le réglage de la pression radiale sur le câble exercée par la roulette d'appui 29, dont la position dépend de celle de la molette 35. On assure ainsi une protection contre toute contrainte inutile sur le câble. On peut aussi, lors d'une opération de calibrage, observer le point de flambage du câble.

Il faut noter que les deux accessoires, tétine 41 et furet 46, sont à usage unique, qu'il faut les remplacer à chaque pose car, pour garder de bonnes performances, il faut écarter ceux qui ont subit une usure même faible. La matière et le mode de fabrication par moulage de ces accessoires permet d'obtenir des coûts très faibles, compatibles avec leur aspect jetable.

Comme on l'a déjà mentionné, la poignée 4 comporte, en s'éloignant de la base 1, un manche suivi d'une partie cylindrique, plus large, 52. Aux Figs. 3 et 4, cette partie 52 comporte un axe 53 qui peut être relié à un organe moteur de rotation. Entre cet axe 53 et l'arbre 28, l'appareil de l'invention comprend un embrayage (non montré en détail, car classique) de réglage mécanique du couple fin, avec indication de la grandeur de la force de poussage ou de tirage maximale, sélectionnée par l'opérateur. Le glissement de l'embrayage n'influence pas la force transmise au câble 36, c'est-à-dire que la force choisie reste constante, quel que soit le glissement (0 à 100 %) de l'embrayage limiteur de couple. Cet embrayage est étanche et permet d'éviter l'emploi de joints rotatifs soumis à une différence de pression, en supprimant ainsi des frottements parasites, gênant pour le contrôle de la pose du câble.

Par ailleurs, comme le montre la Fig. 6, la roulette d'appui 29 comporte, à sa périphérie, une partie aimantée 54 dont chaque passage, devant un compte-tours adéquat, est compté et se traduit par un chiffre apparaissant sur l'écran d'affichage 11. Ce chiffre correspond à la longueur du câble tiré ou poussé.

A titre indicatif, les dimensions de l'appareil sont, par exemple, de 20 cm de longueur, de 15 cm de largeur et de 20 cm de hauteur.

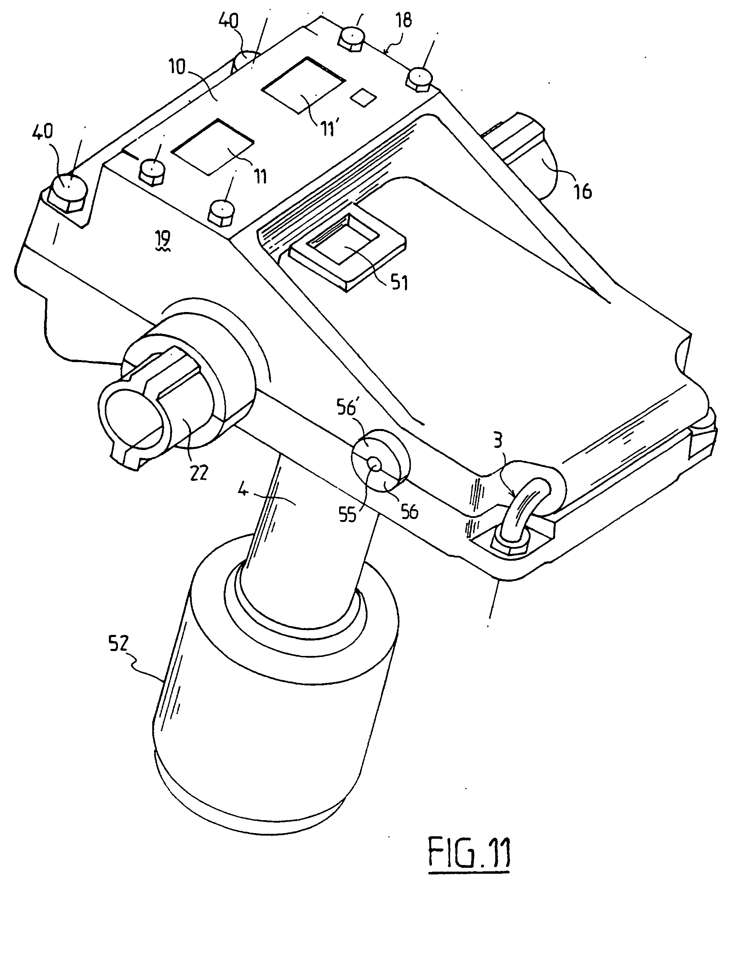

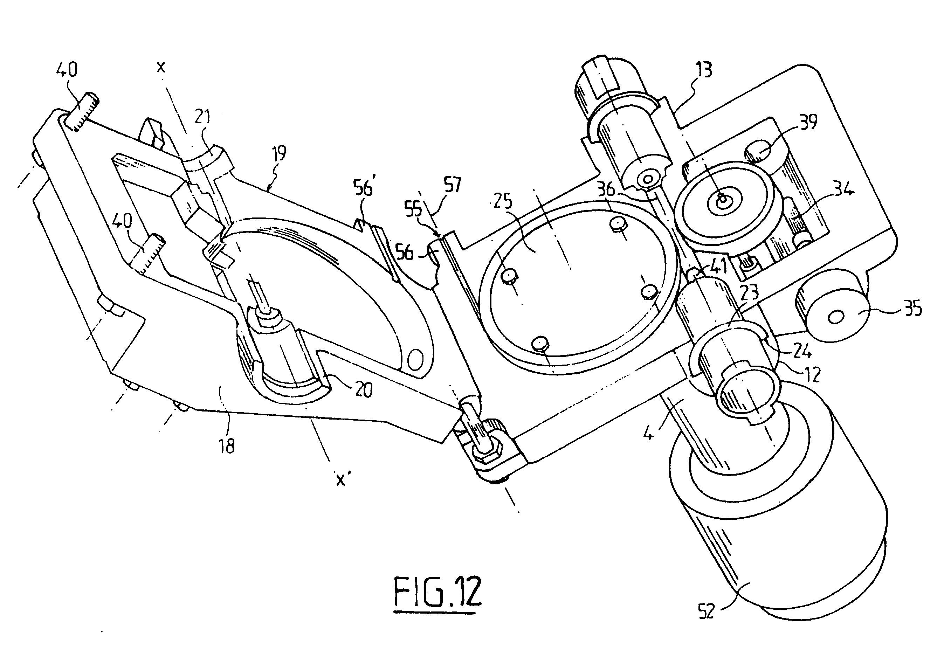

Aux Figs. 11 et 12, on a représenté une variante d'appareil dans lequel est prévu, côté douille de sortie 22, en plus de cette dernière dans ses demi-manchons respectifs 15 et 15', un orifice d'entrée 55 constitué de manière semblable aux douilles 16 et 22. Comme le montre la Fig. 12, l'orifice d'entrée 55 est formé de deux demi-manchons cylindriques 56 et 56', respectivement portés par la base 1 et le couvercle 2. L'axe 57 de l'orifice d'entrée 55 est, de préférence, parallèle à l'axe des douilles 16 et 22, et est pratiquement tangent au cabestan 25. Un moyen d'obturation de l'orifice d'entrée, non montré, est prévu quand l'appareil est prévu pour fonctionner comme il a été décrit en relation avec les Figs. 1 à 10, c'est-à-dire avec un gaz sous pression.

L'orifice d'entrée 55 est prévu pour que l'appareil des Figs. 11 et 12 soit capable de fonctionner en mode miroir, c'est-à-dire que l'entrée 55 sert au passage d'entrée d'un câble ou d'un moyen équivalent qui s'enroule en demi-cercle sur la circonférence du cabestan 25, puis ressort par la douille de sortie 22.

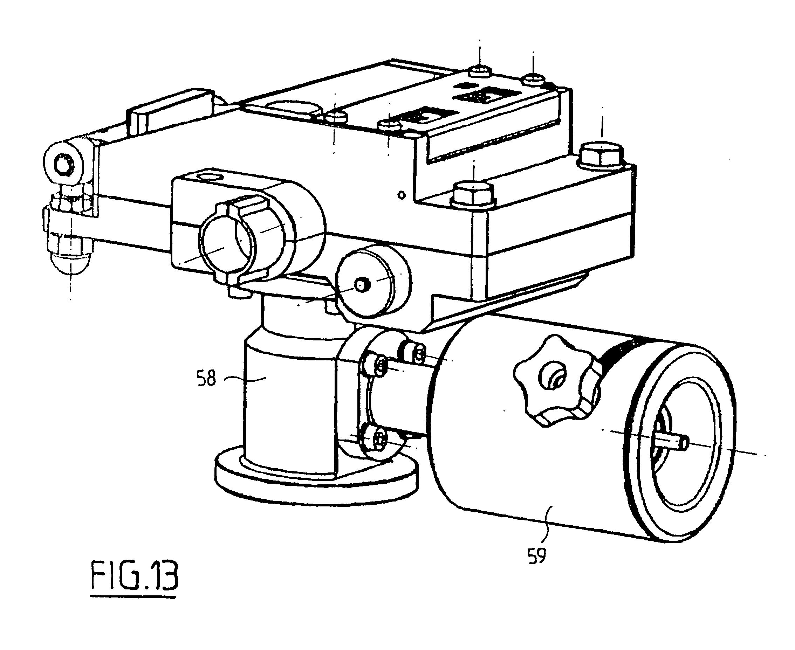

La variante de la Fig. 13 montre comment on modifie la poignée 4 prolongée par la partie 53 dans laquelle est logé un embrayage de réglage mécanique du couple fin, avec indication de la grandeur de la force de poussage ou de tirage maximale, sélectionnée par l'opérateur. A la Fig. 13, la poignée 4 est remplacée par une poignée courte 58 et la partie 53 est remplacée par une partie semblable 59 qui n'est pas coaxiale à la poignée 58, mais dont l'axe de rotation lui est perpendiculaire et parallèle à l'axe YY', Fig. 5. Cette variante permet d'avoir un appareil dont la hauteur peut être plus faible que celle de l'appareil de la Fig. 1, par exemple réduite à 15 cm. Le couplage mécanique entre les parties 58 et 59 est réalisé par un moyen classique.
¹ Translator's note: The source text refers to claims 1 to 18, but there are only 9 claims in all.

## Revendications

1. Appareil portable de poussage et de tirage pour la pose de câble dans un conduit, ledit appareil étant du type qui comprend un boîtier qui a, en plan, la forme d'un rectangle et qui est formé d'une base (1) couplée à une poignée cylindrique (4), un couvercle (2), une articulation à charnière (3) reliant la base (1) et le couvercle (2) sur un petit côté, un jeu de vis (40) permettant d'assurer la fermeture du couvercle sur la base, un cabestan d'entraînement (25) entraîné par un arbre d'entraînement rotatif (28) monté dans la poignée (4), un disque fou (29) à axe parallèle à celui du cabestan (25), ledit cabestan (25) et ledit disque (29) étant montés de manière à recevoir un câble (36) à traiter entraîné et serré entre eux, **caractérisé en ce qu'**il comprend des moyens (30-35) de réglage de la pression radiale qu'exerce ledit disque fou (29) sur ledit câble (36) à traiter, et, dans la poignée (4), entre l'arbre d'entraînement (28) et la prise de force (53), un dispositif de réglage fin du couple à embrayage limiteur de couple avec indication de la grandeur de force de poussage ou de tirage maximale sélectionnée par l'opérateur.

2. Appareil suivant la revendication 1, **caractérisé en ce que** lesdits moyens de réglage (30-35) sont constitués d'une équerre formée par deux bras (30, 31) sur le coin de laquelle l'axe du disque fou (29) est monté, l'un desdits bras (30) étant monté sur un pivot fixe (32) perpendiculaire au fond d'un creux (6) de la base (1) dans lequel se trouve ledit disque fou (29) et l'autre (31) portant un écrou (33) dans lequel passe une vis de réglage (34) pivotant autour d'un pivot fixe par rapport à la base (1), ladite vis de réglage (34) pouvant être tournée par une molette (35) externe à la disposition de l'opérateur.

3. Appareil suivant l'une des revendications précédentes, **caractérisé en ce que**, le couvercle (2) présente, dans une zone centrale de son fond, un regard (51) qui permet de voir, au moins partiellement, le disque fou (29) et d'apprécier son entraînement par le câble à traiter (36).

4. Appareil suivant l'une des revendications précédentes, **caractérisé en ce que**, la base comporte une buse (39) d'entrée d'air comprimé de manière que l'intérieur de l'appareil à l'état fermé puisse être mis sous pression et **en ce que** la douille de sortie (22) par où sort le câble à pousser (36) présente un diamètre interne supérieur à celui du câble de manière que de l'air sous pression puisse s'échapper entre le câble et la paroi cylindrique interne de ladite sortie (22).

5. Appareil suivant la revendication 4, **caractérisé en ce que**, la douille d'entrée (16) par où entre le câble à pousser (36) est prévue pour servir à monter, côté interne, une tétine d'étanchéité (41) à travers laquelle passe le câble entrant dans l'appareil.

6. Appareil suivant la revendication 5, **caractérisé en ce que**, la tétine (41) comprend un pied creux circulaire (43) qui se loge dans une rainure circulaire de la douille d'entrée, prolongé par un corps creux cylindrique (44), puis par une pointe creuse conique (45), la matière constituant la pointe étant translucide ou transparente, la pointe (45) étant coupée de manière à ce que le cercle de coupure assure l'étanchéité sur le câble.

7. Appareil suivant une des revendications précédentes, **caractérisé en ce que** se trouvent, de chaque côté de la base (1), des premiers demi-manchons (12, 13) prévus dans les bords de la base et prolongés en saillie externe, chacun des demi-manchons (12, 13) portant respectivement une douille (16 ou 22) dont le diamètre externe correspond à celui des premiers demi-manchons et dont le diamètre interne est fonction de celui du câble à entraîner (36), et, en face des premiers demi-manchons (12, 13), les bords du couvercle comportent des seconds demi-manchons (20, 21) qui, quand l'appareil est fermé, s'adaptent aux premiers demi-manchons (12, 13) pour former des manchons de révolution, dans lesquels se logent respectivement les douilles (16, 22).

8. Appareil suivant l'une des revendications 1 à 7, **caractérisé en ce que**, le disque four (29) porte à sa périphérie un aimant (54) qui entraîne un compte-tours dont l'affichage est visible dans une fenêtre du couvercle.

9. Appareil suivant l'une des revendications 1 à 18, **caractérisé en ce que**, à l'appareil est associé un furet (46) qui comporte une tige cylindrique axiale (47) qui comporte un bout en forme de tête hémisphérique (48), plus grosse, suivie vers l'arrière d'une jupe conique (49) partant de la périphérie jusqu'à un anneau fin (50) en relief.

10. Appareil suivant l'une des revendications 1 à 9, **caractérisé en ce que**, du côté de la sortie (22) par où sort le câble à pousser (36), il est pourvu d'un orifice d'entrée (55) dont l'axe (57) est tangent au cabestan (25), l'orifice d'entrée (55) étant formé par des demi-manchons cylindriques (56, 56') prévus respectivement dans les bords de la base (1) et du couvercle (2).

## Patentansprüche

1. Tragbares Schiebe- und Ziehgerät zum Verlegen eines Kabels in einem Rohr, wobei das Gerät umfasst: ein rechteckiges Gehäuse mit einer mit einem zylindrischen Griff (4) verbundenen Grundplatte (1), einem Deckel (2), einem Scharniergelenk (3), welches die Grundplatte (1) und den Deckel (2) auf einer kurzen Seite verbindet, einem Satz Schrauben (40), der das Schließen des Deckels auf der Grundplatte gewährleistet, einer Antriebsrolle (25), die von einer rotierenden Antriebswelle (28) angetrieben wird, welche in dem Griff (4) montiert ist, einer beweglichen Scheibe (29) mit einer Achse, die parallel zur Achse der Antriebsrolle (25) verläuft, wobei die Antriebsrolle (25) und die Scheibe (29) so angeordnet sind, dass sie ein zu behandelndes Kabel (36) aufnehmen, welches zwischen ihnen geführt und gezogen wird, **dadurch gekennzeichnet, dass** es Mittel (30 - 35) zur Einstellung des radialen Druckes umfasst, den die bewegliche Scheibe (29) auf das zu handhabende Kabel (36) ausübt, und dass in dem Griff (4) zwischen der Antriebswelle (28) und dem Wellenantrieb (53) eine Feinregelvorrichtung einer Drehmomentbegrenzungs-Kupplung mit Anzeige der von der Bedienungsperson gewählten maximalen Schub- oder Zugkraft angeordnet ist.

2. Gerät nach Anspruch 1, **dadurch gekennzeichnet, dass** die Stellmittel (30 - 35) einen von zwei Armen (30, 31) gebildeten Winkel aufweisen, auf dessen Ecke die Achse der beweglichen Scheibe (29) montiert ist, wobei einer der Arme (30) auf einem festen Drehgelenk (32) senkrecht auf dem Boden einer Vertiefung (6) in der Grundplatte (1) montiert ist, in welcher sich die bewegliche Scheibe (29) befindet, und wobei der andere Arm (31) eine Schraubenmutter (33) trägt, durch die eine Stellschraube (34) hindurchtritt, und um ein festes Drehgelenk in Bezug auf die Grundplatte (1) herumschwenkt, wobei die Stellschraube (34) über ein zur Disposition der Bedienungsperson außen angeordnetes Rändelrad (35) gedreht werden kann.

3. Gerät nach einem der vorangehenden Ansprüche, **dadurch gekennzeichnet, dass** der Deckel (2) in einem mittleren Bereich seines Bodens ein Sichtloch (51) aufweist, welches zumindest teilweise die bewegliche Scheibe (29) sichtbar macht und ihre Mitnahme durch das zu behandelnde Kabel (36) abschätzen lässt.

4. Gerät nach einem der vorangehenden Ansprüche, **dadurch gekennzeichnet, dass** die Grundplatte eine Pressluft-Eintrittsdüse (39) umfasst, so dass das Innere des Gerätes im geschlossenen Zustand mit Druck beaufschlagt werden kann, und dass die Ausgangsbuchse (22), aus der das zu schiebende Kabel (36) austritt, einen inneren Durchmesser aufweist, der größer ist als derjenige des Kabels, so dass Pressluft zwischen dem Kabel und der zylindrischen Innenwand des Ausgangs (22) entweichen kann.

5. Gerät nach Anspruch 4, **dadurch gekennzeichnet, dass** die Eingangsbuchse (16), durch die das zu schiebende Kabel (36) eintritt, dazu dient, dass auf der Innenseite eine Dichtungs-Kabeltülle (41) montiert werden kann, durch welche das in das Gerät eintretende Kabel verläuft.

6. Gerät nach Anspruch 5, **dadurch gekennzeichnet, dass** die Kabeltülle (41) einen hohlen kreisförmigen Fuß (43) besitzt, der sich in eine kreisförmige Nut der Eingangsbuchse einsetzbar und durch einen hohlen zylindrischen Körper (44) verlängert ist, der dann in eine hohle konische Spitze (45) übergeht, wobei das die Spitze bildende Material lichtdurchlässig oder transparent ist und die Spitze (45) derart abschneidbar ist, dass der Schnitt-Umfang die Dichtung am Kabel gewährleistet.

7. Gerät nach einem der vorangehenden Ansprüche, **dadurch gekennzeichnet, dass** sich an jeder Seite der Grundplatte (1) erste Kupplungshälften (12, 13) befinden, die in den Rändern der Grundplatte vorgesehen und nach außen hervorspringend verlängert sind, wobei jede der Kupplungshälften (12, 13) eine Buchse (16 bzw. 22) aufnimmt, deren äußerer Durchmesser demjenigen der ersten Kupplungshälften entspricht, und deren innerer Durchmesser als Funktion desjenigen des anzutreibenden Kabels (36) dient, und dass den ersten Kupplungshälften (12, 13) gegenüberliegend die Ränder des Deckels zweite Kupplungshälften (20, 21) umfassen, welche bei geschlossenem Gerät mit den ersten Kupplungshälften (12, 13) zusammenpassen, um Drehkupplungen zu bilden, in die die Buchsen (16 bzw. 22) eingesetzt sind.

8. Gerät nach einem der Ansprüche 1 bis 7, **dadurch gekennzeichnet, dass** die bewegliche Scheibe (29) an ihrem Umfang einen Magneten (54) besitzt, der einen Drehzahlmesser in Bewegung setzt, dessen Anzeige in einem Fenster des Deckels sichtbar ist.

9. Gerät nach einem der Ansprüche 1 bis 8, **dadurch gekennzeichnet, dass** eine "Rohrpostkapsel" (furet) (46) zu dem Gerät gehört, die einen axialen zylindrischen Schaft (47) besitzt, welcher ein größeres Ende in Form eines halbkugelförmigen Kopfes (48) umfasst, gefolgt von einer dahinter liegenden konischen Schürze (49), die sich bis zu einem dünnen, erhabenen Ring (50) nach außen erweitert.

10. Gerät nach einem der Ansprüche 1 bis 9, **dadurch gekennzeichnet, dass** es auf der Seite des Ausgangs (22) aus dem das zu schiebende Kabel (36) heraustritt, mit einer Eingangsöffnung (55) versehen ist, deren Achse (57) die Antriebsrolle (25) tangiert, wobei die Eintrittsöffnung (55) durch zylindrische Kupplungshälften (56, 56') gebildet ist, die in den Rändern der Grundplatte (1) bzw. des Deckels (2) vorhanden sind.

## Claims

1. Feeding and pulling portable apparatus for the laying of cable in a conduit, the said apparatus being of the type that is made up of a housing, which, in plane view, takes the shape of a rectangle and which is made up of a base (1) coupled to a cylindrical handle (4), a cover (2), a hinge joint (3) linking the base (1) and the cover (2) on one small side, a set of screws (40) enabling the closure of the cover to be ensured on the base, a capstan drive (25) driven by a rotating drive shaft (28) mounted in the handle (4), an idle disk (29) with an axis parallel to that of the capstan (25), the said capstan (25) and the said disk (29) being mounted so as to receive a cable (36) for use driven and tightened between them, **characterised in that** it comprises the means (30-35) of adjustment of the radial pressure that the said idle disk (29) exerts on the said cable (36) for use, and, in the handle (4), between the driving shaft (28) and the take up of the force (53), an end of torque limiting clutch adjustment device with an indication of the size of the maximum feeding or pulling force selected by the operator.

2. An apparatus in accordance with claim 1, **characterised in that** the said means of adjustment (30-35) are made up of a brace formed by two arms (30, 31) on the comer of which the axis of the idle disk (29) is mounted, one of the said anns (30) being mounted on a fixed pivot (32) perpendicular to the bottom of a hollow (6) of the base (1) in which the said idle disc is found (29) and the other (31) bearing a nut (33) through which passes an adjustment screw (34) pivoting around a fixed pivot in relation to the base (1), the said adjustment screw (34) being capable of being turned by a toothed wheel (35) external to the position of the operator.

3. An apparatus in accordance with one of the preceding claims **characterised in that** the cover (2) has, in a central region of its base, an inspection sight (51), which enables the idle disk (29) to be seen, at least partially, and to assess its drive by the cable being used (36).

4. An apparatus in accordance with one of the preceding claims **characterised in that** the base is made up of an input duct (39) of compressed air such that the interior of the apparatus in the closed state might be put under pressure and **in that** the output socket (22) from where the pushed cable exits (36) has an internal diameter greater than that of the cable such that the air under pressure might escape between the cable and the internal cylindrical wall of the said exit (22).

5. An apparatus in accordance with claim 4, **characterised in that** the input socket (16) where the cable for feeding enters (36) is intended to serve to mount an internally watertight cable support sleeve (41) across which passes the cable entering the apparatus.

6. An apparatus in accordance with claim 5, **characterised in that** the cable support sleeve (41) comprises a circular hollow footing (43), which fits into a circular slot of the input socket, lengthened by a cylindrical hollow body (44), then by a conical hollow tip (45), the material making up the tip being translucent or transparent, the tip (45) being cut in a way that the circle of the cut ensures watertightness on the cable.

7. An apparatus according to one of the preceding claims **characterised in that** on each side of the base (1), are found the first half-sleeves (12, 13) provided in the sides of the base and extended as an external projection, each of the half-sleeves (12, 13) bearing a socket (16 or 22) respectively the external diameter of which corresponds to that of the first semi-sleeves and the internal diameter of which depends on that of the cable to carry (36) and, in front of the half-sleeves (12, 13) the sides of the cover are made up of second semi-sleeves (20, 21) which, when the apparatus is closed, adapt themselves to the first half-sleeves (12, 13) to form revolving sleeves, in which the sockets are respectively housed (16, 22).

8. An apparatus in accordance with one of claims 1 to 7, **characterised in that** the idle disk (29) carries a magnet (54) at its periphery, which drives a revolution register the display of which is visible in a window of the cover.

9. An apparatus in accordance with one of claims 1 to 8¹, **characterised in that** a shuttle (46) is combined with the apparatus which comprises an axial cylindrical shaft (47) which is made up of a tip in the shape of a larger hemispherical head (48), followed backwards by a conical skirting (47) starting from the periphery up to an end ring (50) in relief.

10. An apparatus in accordance with one of claims 1 to 9, **characterised in that**, from the output side (22) from where the feed cable comes out (36), it is fitted with an input orifice (55) the axis of which is tangential to the capstan (25), the input orifice being formed by the cylindrical half-sleeves (56, 56') allowed for in the sides of the base (1) and cover (2) respectively.
